# EUROPÄISCHE PATENTSCHRIFT

(11) **EP 3 035 478 B1**
(45) Veröffentlichungstag und Bekanntmachung des Hinweises auf die Patenterteilung: **06.05.2020**
(21) Anmeldenummer: 15198745.0
(22) Anmeldetag: 09.12.2015
(51) Int. Cl.: B60L 53/14, B60L 53/31, B60L 53/18, B60L 53/63, H02J 1/00

(54) **LADESTATION ZUM BEREITSTELLEN ELEKTRISCHER ENERGIE FÜR EIN ELEKTRISCH BETREIBBARES FAHRZEUG UND DIE LADESTATION AUFWEISENDE LADEINSTALLATIONSANORDNUNG**
CHARGING STATION FOR PROVIDING ELECTRICAL ENERGY FOR AN ELECTRICALLY DRIVABLE VEHICLE AND CHARGING INSTALLATION ASSEMBLY COMPRISING THE CHARGING STATION
STATION DE CHARGE DESTINEE A FOURNIR DE L'ENERGIE ELECTRIQUE A UN VEHICULE ELECTRIQUE ET SYSTEME D'INSTALLATION DE CHARGE COMPRENANT LA STATION DE CHARGE

(30) Priorität: 18.12.2014 DE 102014119099; 19.12.2014 DE 102014119301; 24.12.2014 DE 102014019283
(43) Veröffentlichungstag der Anmeldung: 22.06.2016
(73) Patentinhaber: Compleo Charging Solutions GmbH, 44536 Lünen (DE)
(72) Erfinder: Güting, Peter, 58332 Schwelm (DE)
(74) Vertreter: Wickord, Wiro

(56) Entgegenhaltungen:
- US-A- 2 997 627
- US-A- 3 786 313
- US-A- 5 670 743
- US-A1- 2006 028 178
- US-A1- 2006 163 945

## Beschreibung

Die Erfindung betrifft eine Ladestation nach dem Oberbegriff des Patentanspruchs 1.

Ferner betrifft die Erfindung eine Ladeinstallationsanordnung mit wenigstens zwei Ladestationen zum Bereitstellen elektrischer Energie für ein elektrisch betreibbares Fahrzeug, wobei eine erste Ladestation über eine Energiezuleitung an ein Versorgungsnetz angeschlossen ist und wobei eine von der ersten Ladestation zu einer zweiten Ladestation geführte Unterverteilung vorgesehen ist.

Ladestationen für elektrisch betreibbare Fahrzeug werden in zunehmendem Maße im öffentlichen Raum, beispielsweise auf Parkplätzen oder in Parkhäusern, sowie im nicht-öffentlichen Bereich, beispielsweise in der privaten Garage oder auf einem Firmengelände, installiert. Mithilfe der Ladestation wird elektrische Energie aus einem Versorgungsnetz bedarfsgerecht in einen Energiespeicher der elektrisch betreibbaren Fahrzeuge eingespeist. Der Ladevorgang erstreckt sich anders als das Betanken konventioneller Fahrzeuge mit fossilen Brennstoffen häufig über einen Zeitraum von mehreren Stunden. Es bietet sich insofern die Möglichkeit, den Ladevorgang für eine Vielzahl von Fahrzeugen zu koordinieren beziehungsweise nach individuellen Vorgaben durchzuführen.

Konventionelle Ladestationen für den privaten Gebrauch bieten üblicherweise die Möglichkeit, genau ein Fahrzeug anzuschließen und zu laden. Die Ladestation verfügt hierzu über ein Steckelement zum Herstellen einer elektrisch leitenden Verbindung zwischen der Ladestation und dem Fahrzeug. Beispielsweise ist die Ladestation mit einem angeschlagenen Ladekabel ausgestattet. Hierbei wird das über das zur Ladestation gehörende Ladekabel elektrisch kontaktierte Steckelement unmittelbar an ein an dem Fahrzeug vorgesehenes Gegensteckelement angesetzt. Beispielsweise ist das Steckelement der Ladestation in einem Gehäuse derselben derart angeordnet, dass ein externes Ladekabel mit einem Gegensteckelement an das Steckelement der Ladestation angesetzt werden kann zum Herstellen einer elektrischen Verbindung zwischen dem Fahrzeug und der Ladestation.

Aus der DE 10 2009 039 651 A1 ist bekannt, dass eine Ladestation mehr als ein Steckelement aufweist und insofern zwei oder mehr Ladepunkte zum gleichzeitigen Anschließen von zwei oder mehr elektrisch betreibbare Fahrzeugen an die Ladestation bereitstellt. Ladestationen mit zwei oder mehr Ladepunkten, welche bevorzugt in öffentlichen Räumen (beispielsweise auf Parkplätzen) oder für die gewerbliche Nutzung vorgesehen sind, können ein gemeinsames Gehäuse für die Steckelemente aufweisen oder nach Art einer verteilten Ladestation ausgebildet sein. Eine verteilte Ladestation weist eine zentrale Steuereinheit und lokal verteilt angeordnete Ladepunkte auf. Die einzelnen Ladepunkte sind beispielsweise in separaten Teilgehäusen der Ladestation verbaut vorgesehen. Gleichwohl ist nach dem Stand der Technik für jede Ladestation - egal ob verteilt realisiert oder nicht - eine eigene Energiezuleitung zum Anschließen der Ladestation an das Versorgungsnetz vorgesehen.

Aus der DE 43 44 563 C1 und der US 2006/028178 A1 sind weitere Ladestationen für Elektrofahrzeuge bekannt.

Aus der US 2 997 627 A ist eine Verteilerschrankanordnung bekannt, welche Anschlussschienen vorsieht.

Aufgabe der vorliegenden Erfindung ist es, eine Ladestation anzugeben, welche in besonders einfacher Weise elektrisch kontaktiert werden kann. Darüber hinaus ist es Aufgabe der vorliegenden Erfindung, eine die Ladestation aufweisende Ladeinstallationsanordnung anzugeben. Der Anschluss der verschiedenen Ladestationen der Installationsanordnung an das Versorgungsnetz soll hierbei in besonders einfacher Weise erfolgen.

Zur Lösung der Aufgabe weist die Erfindung die Merkmale des Patentanspruchs 1 auf.

Ferner ist die Erfindung in Verbindung mit dem Oberbegriff des Patentanspruchs 12 dadurch gekennzeichnet, dass wenigstens die erste Ladestation als Ladestation nach einem der Ansprüche 1 bis 10 ausgeführt ist und dass zur Realisierung der Unterverteilung eine erste Unterverteilungsleitung aus einem Gehäuse der ersten Ladestation herausgeführt und als Energiezuleitung für die zweite Ladestation in ein Gehäuse derselben geführt ist.

Der besondere Vorteil der Erfindung besteht darin, dass die interne Verkabelung durch das Vorsehen der Anschlussschienen vereinfacht beziehungsweise standardisiert wird und insbesondere der Montageaufwand sinkt. Darüber hinaus vereinfacht sich die Wartung beziehungsweise Instandsetzung der erfindungsgemäßen Ladestation. Überdies sinkt der Aufwand zum Anschließen der in einer Ladeinstallationsanordnung vorgesehenen Ladestationen an das Versorgungsnetz, da auf einen individuellen Anschluss jeder einzelnen Ladestation an das Versorgungsnetz verzichtet wird.

Nach der Erfindung sind in dem Gehäuse der Ladestation separate Anschlussschienen aus einem elektrisch leitenden Werkstoff zueinander beabstandet vorgesehen. Bevorzugt sind Anschlussschienen für die drei Stromphasen (L1, L2, L3), für den Nullleiter (N) und den Schutzleiter (PE) vorgesehen. Jeweils sind die einzelnen elektrischen Leiter der Energiezuleitung einerseits und die korrespondierenden elektrischen Leiter der internen elektrischen Verbindungsleitung mit den Anschlussschienen verbunden. Die Anschlussschienen wirken insofern als Sammelschienen für die Energiezuleitung und für die interne elektrische Verbindungsleitung. Sie sind insofern als zentrale stromführende Komponenten der Ladestation vorgesehen, an die unterschiedliche Leitungen angeschlossen werden. Die Anschlussschienen erlauben den Verzicht auf eine unmittelbare elektrische Kontaktierung der Energiezuleitung und der internen elektrischen Verbindungsleitung. Die Energiezuleitung und die interne elektrische Verbindungsleitung können insofern räumlich verteilt beziehungsweise beabstandet zueinander in dem Gehäuse vorgesehen werden. Beispielsweise ist das in das Gehäuse geführte freie Ende der Energiezuleitung mit der Anschlussschiene kontaktiert. Die Kontaktierung erfolgt hierbei so, dass Phasenleiter der Energiezuleitung und Phasenleiter der internen elektrischen Verbindungsleitung mit den Phasenanschlussschienen verbunden sind; der Nullleiter der Energiezuleitung und der interne elektrische Verbindungsleitung ist mit der Nullanschlussschiene (N-Anschlussschiene) und der Schutzleiter der Energiezuleitung und der internen elektrischen Verbindungsleitung ist mit der PE-Anschlussschiene verbunden.

Die einzelnen elektrischen Leiter der Energiezuleitung und der internen elektrischen Verbindungsleitung können unmittelbar mit den Anschlussschienen kontaktiert oder mittelbar über Verbindungselemente, beispielsweise Klammern oder Verschraubungen, an den Anschlussschienen festgelegt sein. Insbesondere können die elektrischen Leiter lösbar mit den Anschlussschienen verbunden sein. Die Leiter der internen elektrischen Verbindungsleitung können jedenfalls abschnittsweise kabelförmig ausgebildet sein oder durch sonstige elektrische Leiter, welche keine Kabelform aufweisen.

Nach der Erfindung können zwei oder mehr Steckelemente dem Gehäuse zugeordnet sein. Für jedes Steckelement ist dabei eine eigene interne elektrische Verbindungsleitung mit einer Mehrzahl von elektrischen Leitern vorgesehen. Jeweils sind die elektrischen Leiter der internen elektrischen Verbindungsleitungen an die Anschlussschienen der Ladestation angeschlossen. Beispielsweise können die Steckelemente dem Gehäuse räumlich verteilt zugeordnet sein. Insofern kann auch die Kontaktierung der elektrischen Leiter der verschiedenen internen elektrischen Verbindungsleitungen räumlich getrennt vorgesehen werden. Beispielsweise können zwei Steckelemente auf gegenüberliegenden Seiten des Gehäuses vorgesehen sein.

Nach einer bevorzugten Ausführungsform der Erfindung ist eine Unterverteilungsleitung mit einer Mehrzahl von elektrischen Leitern vorgesehen. Die elektrischen Leiter der Unterverteilungsleitung sind elektrisch leitend mit den Anschlussschienen der Ladestation verbunden. Die Unterverteilungsleitung ist aus dem Gehäuse der Ladestation herausgeführt. Vorteilhaft kann durch das Vorsehen der Unterverteilung eine individuelle Konfiguration einer die Ladestation aufweisende Ladeinstallationsanordnung erfolgen. Die Unterverteilung kann insbesondere vorgesehen werden, um eine zweite Ladestation mit der ersten Ladestation zu verbinden. Die zweite Ladestation ist insofern mittelbar über die erste Ladestation an das Versorgungsnetz angeschlossen. Die Unterverteilungsleitung der ersten Ladestation dient dabei als Energiezuleitung der zweiten Ladestation.

Insbesondere kann die die erfindungsgemäße Ladestation aufweisende Ladeinstallationsanordnung durch das Vorsehen der Unterverteilungsleitung modular aufgebaut und bedarfsgerecht erweitert beziehungsweise konfiguriert werden. Das Vorsehen der Anschlussschienen begünstigt dabei den modularen Aufbau beziehungsweise die Erweiterungsfähigkeit. Insbesondere können die elektrischen Leiter der Unterverteilungsleitung in einfacher Weise und räumlich getrennt von den elektrischen Leitern der Energiezuleitung beziehungsweise den elektrischen Leitern der internen elektrischen Verbindungsleitung an die Anschlussschienen angeschlossen sein.

Durch das Vorsehen einer Unterverteilungsleitung kann beim Vorsehen von zwei gleichen Ladestationen innerhalb der Ladeinstallationsanordnung die Anzahl der Ladepunkte verdoppelt werden. Zusätzlich kann nach der Erfindung vorgesehen sein, dass eine erfindungsgemäße Ladestation zwei oder mehr Unterverteilungsleitungen aufweist mit der Folge, dass die Anzahl der Ladepunkte mit geringem Verkabelungsaufwand vergrößert werden kann. Während nach dem Stand der Technik eine separate Energieleitung für jede Ladestation vorgesehen und insofern jede Ladestation unmittelbar über die Energieleitung an das Versorgungsnetz angeschlossen wird, kann nach der Erfindung aufgrund der Unterverteilung auf separate, unmittelbar an das Versorgungsnetz angeschlossene Energiezuleitungen für die zweite und alle weiteren Ladestationen verzichtet werden. Der Anschluss erfolgt mittelbar über die erste Ladestation der Ladeinstallationsanordnung. Die Ladestationen der Ladeinstallationsanordnung sind insofern in einer Reihenanordnung vorgesehen. Auf eine sternförmige Verkabelung und den unmittelbaren Anschluss jeder Ladestation an das Versorgungsnetz wird verzichtet.

Insbesondere beim Bereitstellen beziehungsweise Installieren einer großen Vielzahl von Ladestationen auf einem räumlich begrenzten Territorium bietet die erfindungsgemäße Ladestation mit der Möglichkeit zum Vorsehen von Unterverteilungsleitungen Vorteile. Es kann eine individuell konfigurierbare und modular erweiterbare Ladeinstallationsanordnung mit einer Vielzahl von Ladestationen vorgesehen werden. Eine entsprechende Infrastruktur bietet sich beispielsweise für Parkplätze oder ein gewerbliches Fahrzeugdepot mit einer großen Vielzahl von Elektrofahrzeugen an, wie es beispielsweise bei Autovermietungen, Speditionen oder bei durch einen hohen Mobilitätsgrad gekennzeichneten Dienstleistungsbetrieben/Behörden (Kommunalfahrzeuge, Pflegedienste, Polizei etc.) anzutreffen ist.

Nach der Erfindung können ein Querschnitt der Unterverteilungsleitung und ein Querschnitt der Energiezuleitung gleich gewählt sein. Ebenso kann vorgesehen sein, dass ein Querschnitt der Unterverteilungsleitung beziehungsweise der einzelnen Leiter der Unterverteilungsleitung kleiner gewählt ist als ein Querschnitt der Energiezuleitung beziehungsweise der einzelnen Leiter der Energiezuleitung. Die elektrischen Leiter der Unterverteilungsleitung können dabei über einzelne Leitungssicherungen abgesichert sein. Die Reduzierung des Querschnitts erfolgt belastungsgerecht. Da über die Energiezuleitung der ersten Ladestation die Energie für ebendiese Ladestation und alle weiteren Ladestationen der Ladeinstallationsanordnung geführt wird, ist der Querschnitt der Energiezuleitung der ersten Ladestation entsprechend groß zu dimensionieren. Über die Unterverteilungsleitungen wird demgegenüber weniger Energie geführt und ein Querschnitt der Unterverteilungsleitung beziehungsweise der einzelnen Leiter der Unterverteilungsleitung kann entsprechend geringer gewählt werden. Sofern über die Unterverteilungsleitung eine zweite Ladestation angeschlossen ist, welche ihrerseits eine Unterverteilung aufweist zum Anschließen einer dritten Ladestation, kann in analoger Weise der Querschnitt der zum Verbinden der zweiten Ladestation mit der dritten Ladestation vorgesehenen Unterverteilungsleitung kleiner gewählt werden als der Querschnitt der zum Verbinden der ersten Ladestation mit der zweiten Ladestation vorgesehenen Unterverteilungsleitung.

Die Anschlussschienen sind nach einer Weiterbildung der Erfindung aus einem metallischen, elektrisch leitenden Werkstoff, beispielsweise aus Stahl oder Kupfer, gebildet. Insbesondere sind die Anschlussschienen starr und gegen das Gehäuse isoliert an ebendiesem festgelegt. In wirtschaftlich vorteilhafter Weise können die Anschlussschienen aus einem Halbzeug, insbesondere aus einem Profil hergestellt sein. Beispielsweise kann ein Flachstahl zugeschnitten werden zum Herstellen der Anschlussschienen. Eine Oberfläche der Anschlussschienen kann so ausgebildet sein, dass eine gute elektrische Kontaktierung gewährleistet ist.

Nach einer Weiterbildung der Erfindung ist für das wenigstens eine dem Gehäuse zugeordnete Steckelement der Ladestation ein Energieversorgungsmodul vorgesehen, welches die Leitungssicherung für die elektrischen Leiter der internen elektrischen Verbindungsleitung, das der internen elektrischen Verbindungsleitung zugeordnete Schaltelement sowie den für das Steckelement vorgesehenen Schutzschalter aufweist. Das Energieversorgungsmodul beziehungsweise die hierin vorgesehenen Leitungssicherungen, Schaltelemente beziehungsweise Schutzschalter sind insbesondere so angeordnet, dass sie durch die freigegebene Öffnung des Gehäuses zugänglich sind. Es ergibt sich hierdurch die Möglichkeit zur einfachen Wartung des Energieversorgungsmoduls.

Die Leistungssicherungen können zum Schutz vor Überlast beispielsweise als Schmelzsicherungen oder als LS-Schalter beziehungsweise Sicherungsautomat /MCB: Miniature Circuit Breaker) ausgeführt sein. Sie können wenigstens einzelnen Leitern der internen elektrischen Verbindungsleitung und/oder der Unterverteilungsleistung zugeordnet sein. Der Schutzschalter kann insbesondere als Fehlerstrom-Schutzeinrichtung (RCD: Residual Current protective Device) dienen und einem Steckelement individuell oder einer Mehrzahl von Steckelementen der gleichen Ladestation zugeordnet sein.

Bevorzugt sind die Leitungssicherungen, die Schalteinheit und der Schutzschalter so in dem Gehäuse der Ladestation angeordnet, dass zum Zugriff auf diese Komponenten beispielsweise für Wartungsarbeiten oder zur Demontage das Schließelement zum Freigeben der Öffnung des Gehäuses in eine Öffnungs- beziehungsweise Freigabeposition verschwenkt wird. Insbesondere können durch das Vorsehen eines dem Schließelement zugeordneten Schlosses das Gehäuse in einer Schließstellung des Schließelements verschlossen werden. Die Leitungssicherungen, die Schalteinheit und der Schutzschalter sowie das wenigstens eine Steckelement sind dann vor unberechtigtem Zugriff und/oder Manipulation geschützt.

Sofern die Ladestation mehr als ein Steckelement aufweist, kann wahlweise für jedes Steckelement ein eigenes Energieversorgungsmodul vorgesehen sein. Ebenso kann ein gemeinsames Energieversorgungsmodul für zwei oder mehr Steckelemente der Ladestation vorgesehen werden. Insbesondere kann ein gemeinsames Energieversorgungsmodul für alle Steckelemente der Ladestation vorgesehen werden. Es ist dann bevorzugt so, dass das für zwei oder mehr Steckelemente gemeinsam vorgesehene Energieversorgungsmodul je Steckelement die Leitungssicherung, das Schaltelement sowie den Schutzschalter aufweist.

Die der Unterverteilungsleitung zugeordneten Leitungssicherungen können als Komponenten einer Sicherungsleiste realisiert sein. Die Sicherungsleiste kann benachbart zu dem Energieversorgungsmodul vorgesehen sein. Das Energieversorgungsmodul kann ebenso wie die Sicherungsleiste an die Anschlussschienen angesetzt sein. Insbesondere kann für jede Unterverteilungsleitung eine einzelne Sicherungsleiste vorgesehen werden. Die Sicherungsleiste dient insbesondere der Aufnahme der Leitungssicherungen der Unterverteilungsleitung, wobei die Leitungssicherungen der Unterverteilungsleitung bevorzugt in dem Gehäuse der Ladestation vorgesehen sein können.

Nach der Erfindung sind die Anschlussschienen berührungsgeschützt in dem Gehäuse montiert. Insbesondere kann zur Realisierung des Berührungsschutzes für die Anschlussschienen vorgesehen sein, dass die

Anschlussschienen zwischen einer Gehäusewandung einerseits und dem Energieversorgungsmodul beziehungsweise der Sicherungsleiste beziehungsweise einer weiteren Abdeckung andererseits montiert sind. Das Energieversorgungsmodul überdeckt hierbei wenigstens einzelne Anschlussschienen der Ladestation jedenfalls abschnittsweise. Es weist dabei vorzugsweise eine flächig erstreckt ausgebildete Front, in der Ausnehmungen für die Leitungssicherungen, Schaltelemente und/oder Schutzschalter so gebildet sind, dass die Leitungssicherungen, Schaltelemente und/oder Schutzschalter durch die vom Schließelement nicht überdeckte Öffnung des Gehäuses zugänglich sind. Die Front des Energieversorgungsmoduls, die weiteren Abdeckungen und/oder eine Front der Sicherungsleiste sind bevorzugt aus einem nicht leitenden Werkstoff, insbesondere aus einem Kunststoff hergestellt. Als Gehäusewandung kann insbesondere eine der Öffnung gegenüberliegende Gehäuserückwand vorgesehen werden. Der Berührungsschutz für die Anschlussschienen kann bei einer entsprechenden Konfiguration der Ladestation besonders kostengünstig erreicht werden.

Des Energieversorgungsmodul, der Sicherungsleisten und die weiteren Abdeckung können insbesondere der am Gehäuse vorgesehenen und durch das Schließelement verschließbaren Öffnung so zugeordnet sein, dass sie durch die freigegebene Öffnung zugängig sind. Es vereinfacht sich hierdurch die Wartung beziehungsweise modulare Erweiterung der Ladestation und der die Ladestation aufweisende Ladeinstallationsanordnung, ohne dass die Betriebssicherheit beeinflusst ist oder die stromführenden Anschlussschienen während des Betriebs zugängig sind.

Die weiteren Abdeckungen können beispielsweise abnehmbar vorgesehen werden. Insofern kann nachträglich eine weitere Abdeckung entfernt und eine zusätzliche Unterverteilungsleitung mit oder ohne zugeordneter Sicherungsleiste installiert werden. Die Realisierung des Berührungsschutzes trägt insofern ebenfalls dem modularen Gedanken der Gesamtanordnung Rechnung.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details der Ladestation gelten selbstverständlich auch im Zusammenhang mit der erfindungsgemäßen Ladeinstallationsanordnung und umgekehrt. So kann auf die Offenbarung zu den einzelnen Erfindungsaspekten stets wechselseitig Bezug genommen werden.

Nachfolgend wird die Erfindung anhand von Zeichnungen näher erläutert. Die Zeichnungen dienen lediglich beispielhaft der Klarstellung der Erfindung und haben keinen einschränkenden Charakter. Es zeigen:
- Fig. 1: eine erfindungsgemäße Ladestation mit zwei einem Gehäuse der Ladestation zugeordneten Steckelementen, einer in das Gehäuse geführten Energiezuleitung und einer aus dem Gehäuse herausgeführten Unterverteilungsleitung,
- Fig. 2: die Ladestation nach Fig. 1 in einem ersten Montageschritt, wobei zur deutlichen Darstellung eine im regulären Betrieb der Ladestation durch ein Schließelement verschlossene Öffnung des Gehäuses freigegeben ist,
- Fig. 3: einen zweiten Montageschritt der Ladestation nach Fig. 1,
- Fig. 4: einen dritten Montageschritt der Ladestation nach Fig. 1,
- Fig. 5: eine erfindungsgemäße Ladeinstallationsanordnung mit einer Mehrzahl von erfindungsgemäßen Ladestationen nach Fig. 1,
- Fig. 6: die Ladestation nach Fig. 1 in einer alternativen Konfiguration mit zwei Unterverteilungsleitungen in einem ersten Montageschritt,
- Fig. 7: die Ladestation nach Fig. 6 in einem weiteren Montageschritt und
- Fig. 8: eine alternative Konfiguration der erfindungsgemäßen Ladeinstallationsanordnung mit insgesamt sechs verteilt angeordneten Ladestationen, welche über eine zentrale Energiezuleitung an ein Versorgungsnetz angeschlossen sind.

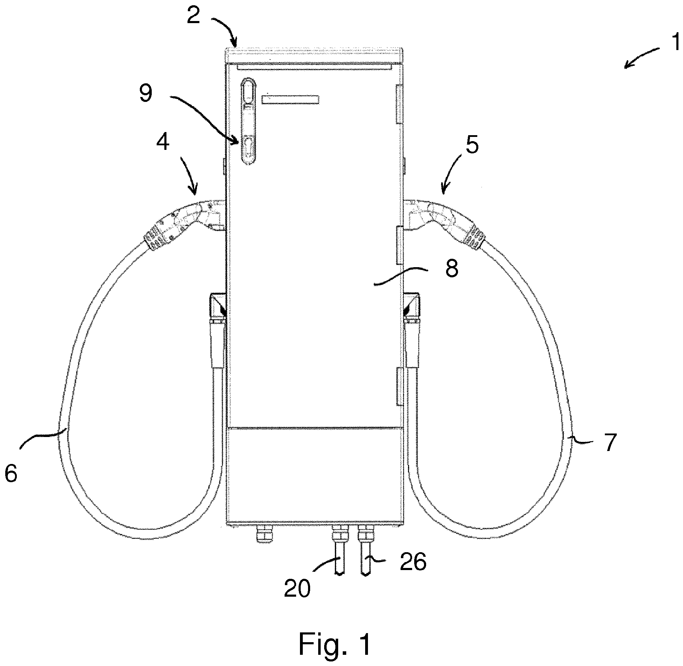

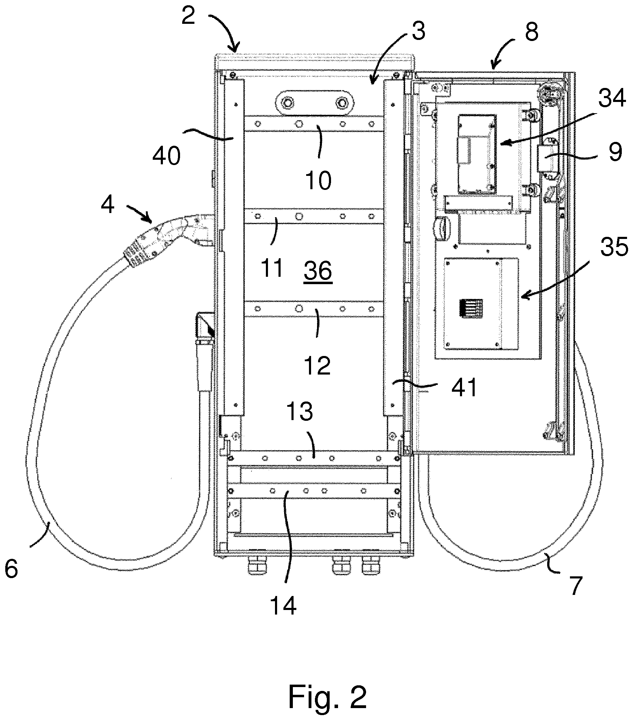

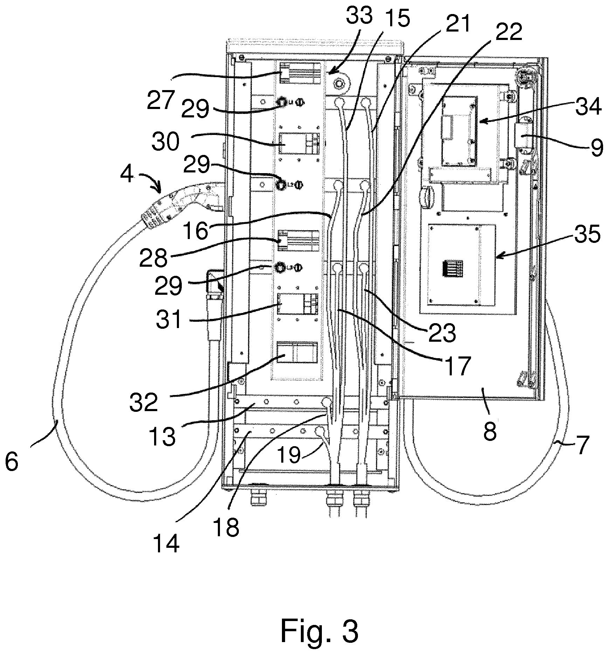

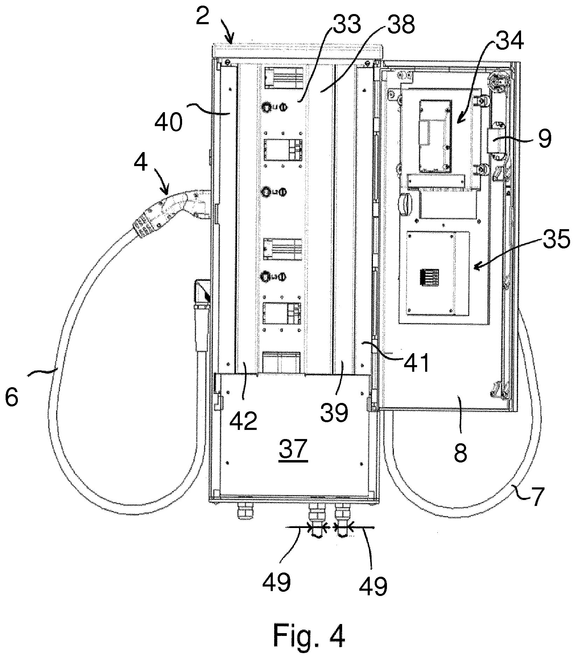

Eine erfindungsgemäße Ladestation 1 zum Bereitstellen elektrischer Energie für ein elektrisch betreibbares Fahrzeug nach den Fig. 1 bis 4 umfasst ein Gehäuse 2 mit einer Öffnung 3, zwei Steckelemente 4, 5, welche über zwei angeschlagene Ladekabel 6, 7 kontaktiert sind, und ein der Öffnung 3 zugeordnetes Schließelement 8 mit einem Schloss 9. Der interne Aufbau der Ladestation 1 ergibt sich insbesondere aus der Sequenzdarstellung unterschiedlicher Montageschritte nach den Fig. 2 bis 4. In dem Gehäuse 2 der Ladestation 1 sind insbesondere fünf horizontal erstreckte, zueinander beabstandete und miteinander nicht elektrisch leitend verbundene Anschlussschienen 10, 11, 12, 13, 14, eine Energiezuleitung 20 mit einer Mehrzahl von elektrischen Leitern 15, 16, 17, 18, 19 sowie eine Mehrzahl von elektrischen Leitern 21, 22, 23, 24, 25 aufweisende Unterverteilungsleitung 26 vorgesehen. Zusätzlich sind nicht dargestellte interne elektrische Verbindungsleitungen vorgesehen, welche von den Anschlussschienen 10, 11, 12, 13, 14 zu den zwei Steckelementen 4, 5 geführt sind.

Jeweils ist für jedes Steckelement 4, 5 eine Leitungssicherungseinheit 27, 28 vorgesehen. Darüber hinaus sind für einzelne Leiter der internen elektrischen Verbindungsleitungen Schmelzsicherungen 29 vorgesehen. Weiter sind für jedes Steckelement 4, 5 ein Schutzschalter 30, 31 sowie eine Schalteinheit 32 mit zwei den einzelnen internen elektrischen Verbindungsleitungen zugeordneten Schaltelementen zum wahlweisen Herstellen beziehungsweise Trennen einer elektrisch leitenden Verbindung zwischen jedem einzelnen Steckelement 4, 5 und der Energiezuleitung 20 vorgesehen. Die Leitungssicherungseinheiten 27, 28, die Schutzschalter 30, 31 sowie die Schalteinheit 32 sind einem gemeinsamen Energieversorgungsmodul 33 zugeordnet. Das Energieversorgungsmodul 33 dient insofern der Versorgung beziehungsweise Ansteuerung der zwei Steckelemente 4, 5. Je eine Leitungssicherungseinheit 27, 28, ein Schutzschalter 30,31 und ein Schaltelement (Schütz) das Energieversorgungsmodul 33 sind einer internen elektrischen Verbindungsleitung und damit einem Steckelement 4, 5 zugeordnet.

Die Energieversorgungsmodul 33 ist nach der Erfindung bevorzugt nach dem IPxxC-Standard berührungsgeschützt ausgeführt mit der Folge, dass etwa die Betätigung der Schutzschalter 30, 31 durch einen Laien erfolgen darf. Es ist hierbei definiert, dass auch bei der Verwendung von Werkzeugen (beispielsweise Schraubendrehern) oder anderen Gegenständen mit einem Durchmesser von 2,5 mm und einer Länge von 100 mm ein Kontakt mit stromführenden beziehungsweise unter Spannung stehenden Komponenten zuverlässig vermieden wird.

Weiter sieht die Ladestation 1 eine an dem Schließelement 8 festgelegte Steuerungs- und Kommunikationseinheit 34 und eine der Steuerungs- und Kommunikationseinheit 34 zugeordnete Versorgungseinheit 35 vor. Nicht dargestellt sind ferner diverse Relais sowie ein GPRS-Modem oder eine Ethernet-Schnittstelle für die Kommunikation. Die an dem Schließelement festgelegten Komponenten 34, 35 sind so vorgesehen, dass sie in einer Schließposition des Schließelements 8, in der die Öffnung 3 des Gehäuse 2 geschlossen ist, unzugänglich in dem Gehäuse 2 vorgesehen und gegen Manipulation geschützt sind.

Weiterhin kann vorgesehen sein, dass die Steuerungs- und Kommunikationseinheit 34 mit einer nicht dargestellten Anzeigeeinheit, beispielsweise einer Beleuchtungseinheit zur Visualisierung eines Betriebszustands der Ladestation 1 oder einem Display zusammenwirkt. Ferner kann ein RFID-Leser, ein Schlüsselschalter oder eine andere geeignete Autorisierungs- beziehungsweise Identifikationseinheit vorgesehen sein. Die Autorisierungs- beziehungsweise Identifikationseinheit kann zum einen vorgesehen sein, um die Berechtigung eines Nutzers zum Starten beziehungsweise zum Beenden eines Ladevorgangs zu erfassen. Eine erfolgreiche Autorisierung des Nutzers kann Voraussetzung sein dafür, dass der Ladevorgang initialisiert und die Spannung für das Steckelement eingeschaltet wird. Die Autorisierung erfolgt insofern getrennt für die einzelnen Steckelemente einer Ladestation. Zum anderen kann sie dazu dienen, Fahrzeuge in einem weit verzweigten Ladenetz mit einer Vielzahl von Ladestationen (Ladeinstallationsanordnung) zu lokalisieren. Weiter kann ein Zähler zum Strommessen beziehungsweise mengenmäßigen Erfassen der in das Fahrzeug übertragenen Energie vorgesehen werden. Der Zähler kann insbesondere mit der Steuerungs- und Kommunikationseinheit 34 zusammenwirken. Auf Basis der Zählerwerte kann der Ladevorgang gegenüber dem Nutzer abgerechnet werden. Insbesondere kann ein geeichter Zähler vorgesehen werden, wenn die Abrechnung des Ladevorgangs gestützt wird auf Werte, die von dem Zähler ermittelt sind. Beispielsweise kann ein Zählerstand des Zählers für eine außenstehende Person ablesbar sein. Der Zähler kann hierzu beispielsweise in dem Gehäuse hinter eine Scheibe angeordnet oder einer Ausnehmung zugeordnet sein.

Die Steuerungs- und Kommunikationseinheit 34 kann beispielsweise einen Ladevorgang nach dem Mode-3-Standard gemäß der IEC61851-1 durchführen. Die Steuerungs- und Kommunikationseinheit 34 ist derart ausgebildet, dass eine Kommunikation mit dem Fahrzeug aufgebaut wird und dem Fahrzeug vonseiten der Steuerungs- und Kommunikationseinheit 34 Ladeparameter, beispielsweise ein maximal zulässiger Ladestrom, verbindlich vorgegeben werden. Die Ladeparameter werden dann von einem in dem Fahrzeug vorgesehenen Ladegerät eingestellt. Die Einhaltung der Vorgabewerte für die Ladeparameter wird beispielsweise mit Hilfe des Zählers (Strommessers) überwacht, indem der tatsächliche Ladestrom gemessen und mit dem Vorgabewert für den Ladestrom vergleichen wird. Die Steuerungs- und Kommunikationseinheit 34 ist insofern ausgebildet zum Einlesen eines Messwerts des Zählers und zum Bestimmen einer Differenz zwischen dem maximal zulässigen Ladestrom und dem tatsächlichen Ladestrom. Sofern fahrzeugseitig ein unzulässiger Ladestrom und insbesondere ein Ladestrom oberhalb des maximal zulässigen Ladestroms eingestellt wird, kann vonseiten der Ladestation der Ladevorgang unterbrochen werden. Die Steuerungs- und Kommunikationseinheit steht insofern mit dem Schaltelement (Schütz) derart in einer Wirkverbindung, dass wenigstens einzelne Steckelemente 4, 5 bei einer Abweichung der tatsächlichen Ladeparameter von den Vorgabewerten für die Ladeparameter spannungsfrei geschaltet werden.

Die Ladestation 1 ist zum 1- oder 3-phasigen Laden von elektrisch betreibbaren Fahrzeugen vorgesehen. Es sind insofern drei Phasenanschlussschienen 10, 11, 12 für die Phasen L1, L2, L3, eine dem Nullleiter zugeordnete N-Anschlussschiene 13 sowie eine dem Schutzleiter (PE-Leiter) zugeordnete PE-Anschlussschiene 14 in einer im Wesentlichen horizontaler Erstreckung in dem Gehäuse 2 festgelegt. Die Phasenanschlussschienen 10, 11, 12 sind in einem Abstand von 180 mm in dem Gehäuse 2 montiert.

Das Energieversorgungsmodul 33 ist im Bereich der Phasen-Anschlussschienen 10, 11, 12 montiert und überdeckt diese teilweise. Des Weiteren ist zur Realisierung eines Berührungsschutzes für die Anschlussschienen 10, 11, 12, 13, 14 vorgesehen, dass diese benachbart zu einer Gehäuserückwand 36 zwischen ebendieser und dem Energieversorgungsmodul 33 montiert sind. Da das Energieversorgungsmodul 33 sich nur über einen Teilbereich des Gehäuses 2 erstreckt und die Anschlussschienen 10, 11, 12, 13, 14 nur teilweise überdeckt, sind des Weiteren eine Querabdeckung 37 für die N-Anschlussschiene 13 und die PE-Anschlussschiene 14 sowie benachbart zu dem Energieversorgungsmodul 33 weitere der Energiezuleitung 20, der Unterverteilungsleitung 26 sowie den Steckelementen 4, 5 zugeordnete Abdeckungen 38, 39, 40, 41 vorgesehen. Zwischen einer dem ersten Steckelement 4 zugeordneten Abdeckung 40 und dem Energieversorgungsmodul 33 ist darüber hinaus ein Spalt gebildet, der durch eine weitere Abdeckung 42 überdeckt ist. Insofern sind die Anschlussschienen 10, 11, 12, 13, 14 durch das Energieversorgungsmodul 33 sowie die diversen Abdeckungen 37, 38, 39, 40, 41, 42 vollständig überdeckt und vor Berührung geschützt in dem Gehäuse montiert. Die Überdeckung der Anschlussschienen 10, 11, 12, 13, 14 ist insofern modular realisiert. Insbesondere sind die diversen Abdeckungen 37, 38, 39, 40, 41, 42 sowie die Sicherungsleisten 45, 46 abnehmbar in dem Gehäuse festgelegt. Einzelne Abdeckungen 37, 38, 39, 40, 41, 42 und die Sicherungsleisten 45, 46 können entsprechend der jeweiligen Konfiguration der Ladestation 1 montiert oder ausgetauscht werden. Ebenso kann das Energieversorgungsmodul 33 abnehmbar in dem Gehäuse montiert sein.

Das Schließelement 8 kann mittels des dem Schließelement 8 zugeordneten Schlosses 9 in der Schließposition, welche in Fig. 1 dargestellt ist, verriegelt werden. Es ist insofern einem ungewollten, missbräuchlichen beziehungsweise unautorisierten Zugriff auf die in dem Gehäuse vorgesehenen Funktionskomponenten der Ladestation 1, insbesondere auf das Energieversorgungsmodul 33 und die Anschlussschienen 10, 11, 12, 13, 14, vorgebeugt.

Vorliegend weisen die Energiezuleitung 20 und die Unterverteilungsleitung 26 einen gleichen Querschnitt 49 auf. Auf Leitungssicherungen für die Unterverteilungsleitung 26 kann insofern verzichtet werden.

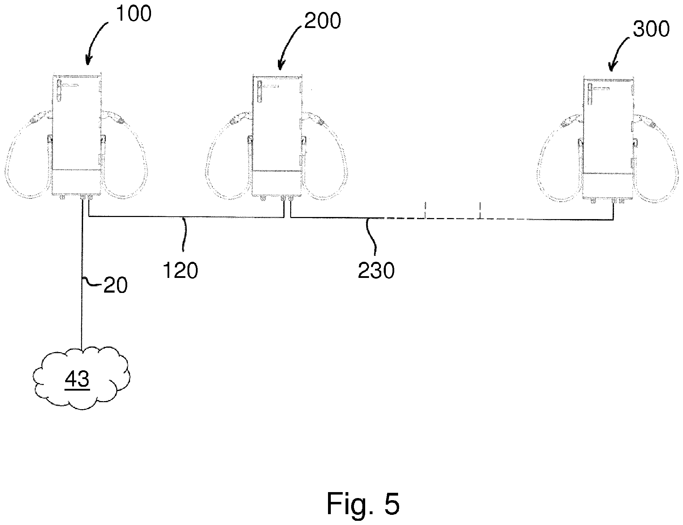

Fig. 5 zeigt eine erste erfindungsgemäße Ladeinstallationsanordnung mit insgesamt drei Ladestationen 100, 200, 300, welche analog zur erfindungsgemäßen Ladestation 1 nach den Fig. 1 bis 4 ausgeführt sein können. Eine erste Ladestation 100 ist unmittelbar über die Energiezuleitung 20 an ein Versorgungsnetz 43 angeschlossen. Eine zweite Ladestation 200 ist über eine Unterverteilung an die erste Ladestation 100 angeschlossen. Die Unterverteilung ist derart realisiert, dass eine erste Unterverteilungsleitung 120 von der ersten Ladestation 100 zur zweiten Ladestation 200 geführt ist. Die erste Unterverteilungsleitung 120 der ersten Ladestation 100 dient insofern zugleich als Energiezuleitung für die zweite Ladestation 200. Eine weitere Unterverteilung ist zwischen der zweiten Ladestation 200 und einer dritten Ladestation 300 vorgesehen. Die zweite Ladestation 200 weist insofern eine zweite Unterverteilungsleitung 230 auf, welche in Bezug auf die dritte Ladestation 300 als Energiezuleitung fungiert. Die dritte Ladestation 300 der Ladeinstallationsanordnung verzichtet nach der vorliegenden Ausführungsform auf eine weitere Unterverteilung.

Zwischen der zweiten Ladestation 200 und der dritten Ladestation 300 können weitere, nicht dargestellte Ladestationen in analoger Weise vorgesehen werden. Es ergibt sich insgesamt eine Reihenanordnung von Ladestationen 100, 200, 300, wobei nur die erste Ladestation 100 unmittelbar an das Versorgungsnetz 43 angeschlossen ist und alle weiteren Ladestationen 200, 300 lediglich mittelbar über die erste Ladestation 100 mit dem Versorgungsnetz 43 verbunden sind. Der Verkabelungsaufwand für die Ladeinstallationsanordnung ist insofern äußerst gering. Insbesondere kann auf eine sternförmige Verkabelung, das heißt auf den unmittelbaren Anschluss aller Ladestationen 100, 200, 300 der Ladeinstallationsanordnung an das Versorgungsnetz 43 verzichtet werden. Gleichwohl sieht jede Ladestation 100, 200, 300 eine eigene Steuerungs- und Kommunikationseinheit 24, eine Versorgungseinheit 25 sowie Mittel zur Kommunikation vor. Jede Ladestation 100, 200, 300 kann somit autark betrieben werden. Fällt beispielsweise die erste Ladestation 100 aus, kann unabhängig davon ein Betrieb der zweiten und dritten Ladestation 200, 300 fortgeführt werden. Die Unterverteilung über die erste Ladestation 100 erfolgt insofern unabhängig der Funktionsfähigkeit der ersten Ladestation 100. Ebenso erfolgt der Betrieb der zweiten und dritten Ladestation 200, 300 unabhängig vom Betrieb der ersten Ladestation 100.

Die Ladeinstallationsanordnung nach Fig. 5 ist exemplarisch nach Art einer offenen Kettenanordnung realisiert. Es ist die erste Ladestation 100 über die Energiezuleitung 20 an das Versorgungsnetz 43 angeschlossen und alle weiteren Ladestationen 200, 300 reihen sich an die jeweils versorgungsnetznähere Ladestation an. Nach einer alternativen, nicht dargestellten Ausführungsform der Erfindung kann die Ladeinstallationsanordnung nach Art einer Ringanordnung ausgeführt sein. Es sind hierbei wenigstens zwei Energiezuleitungen 20 zum direkten, unmittelbaren Verbinden von wenigstens zwei Ladestationen mit dem Versorgungsnetz vorgesehen. Weitere mittelbar an das Versorgungsnetz angeschlossene Ladestationen sind den beiden direkt angeschlossenen Ladestationen über Unterverteilungsleitungen so zugeordnet und untereinander verbunden, dass jede mittelbar angeschlossene Ladestation mit wenigstens zwei benachbarten Ladestationen, die mittelbar oder direkt an das Versorgungsnetz angeschlossen sind, über Unterverteilungsleitungen verbunden ist. Ein Querschnitt der Unterverteilungsleitung beziehungsweise der einzelnen elektrischen Leiter der Unterverteilungsleitung kann auch hier kleiner dimensioniert sein als ein Querschnitt der Energiezuleitung beziehungsweise der einzelnen elektrischen Leiter der Energiezuleitung.

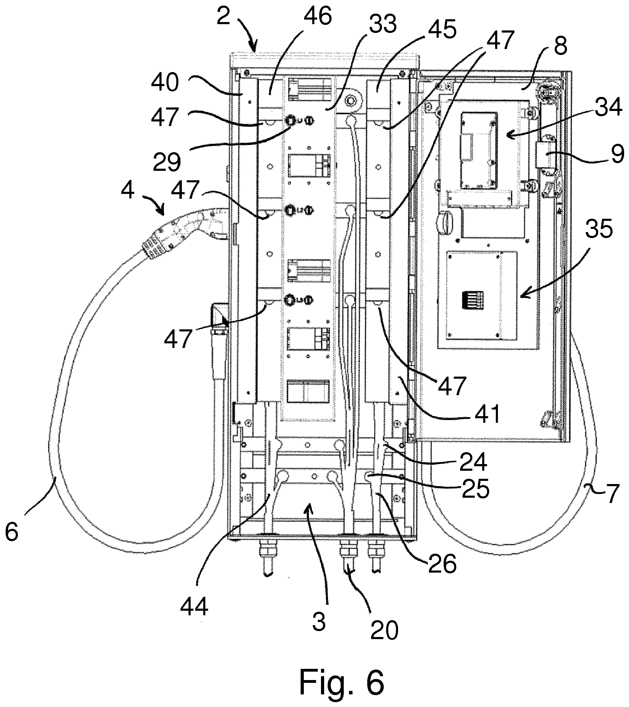

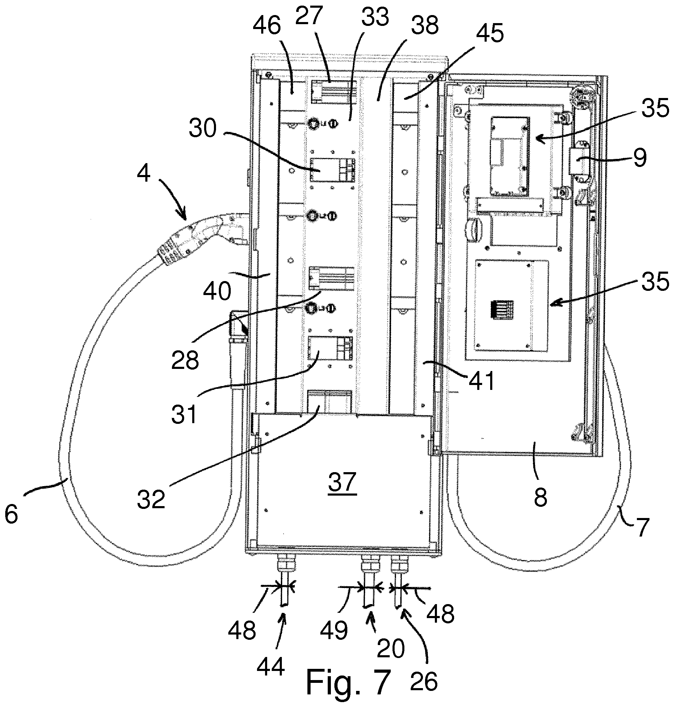

Eine alternative Konfiguration der erfindungsgemäßen Ladestation 1 nach den Fig. 6 und 7 sieht vor, dass eine zweite Unterverteilungsleitung 44 vorgesehen ist, welche in analoger Weise über fünf nicht im Detail dargestellte elektrische Leiter verfügt. Den beiden Unterverteilungsleitungen 26, 44 sind zwei Sicherungsleisten 45, 46 zugeordnet, welche anstelle der vormals vorgesehenen Abdeckungen 39, 42 montiert sind und wie vormals die Abdeckungen 39, 42 einen Berührungsschutz für die Anschlussschienen 10, 11, 12, 13, 14 definieren. Die Sicherungsleisten 45, 46 weisen jeweils drei den Phasen-Anschlussschienen 10, 11, 12 zugeordnete Leitungssicherungen 47 auf. Die Leitungssicherungen 47, welche beispielsweise als Schmelzsicherung ausgeführt sind, dienen zum Absichern der Unterverteilungsleitungen 26, 44. Die Sicherungsleisten 45, 46 sind beispielsweise nach Art von NH00-Sicherungsleisten ausgeführt mit NH00-Sicherungen (Schmelzsicherungen) als Leitungssicherungen 47.

Die zwei Unterverteilungsleitungen 26, 44 werden aus dem Gehäuse 2 der Ladestation 1 herausgeführt. Es ist insbesondere vorgesehen, dass ein Querschnitt 48 an der Unterverteilungsleitung 26, 44 kleiner ist als ein Querschnitt 49 der Energiezuleitung 20.

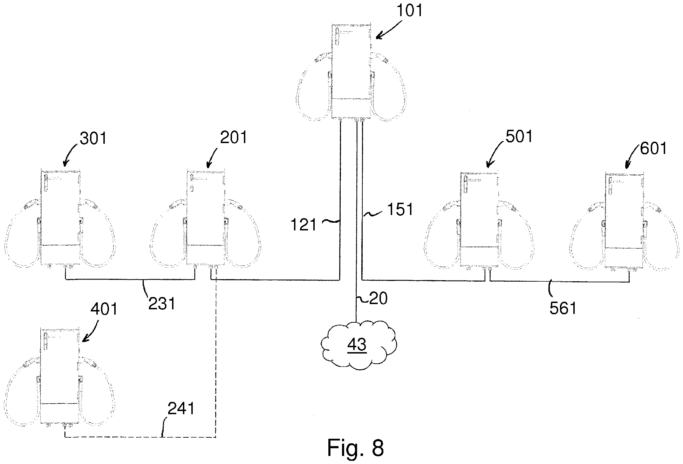

Eine zweite Ausführungsform einer erfindungsgemäßen Ladeinstallationsanordnung nach Fig. 8 sieht insgesamt sechs erfindungsgemäßen Ladestationen 101, 201, 301, 401, 501, 601 vor, wobei allein eine erste Ladestation 101 über eine Energiezuleitung 20 an das Versorgungsnetz 43 angeschlossen ist. Die erste Ladestation 101, welche über zwei Unterverteilungsleitungen 121, 151 verfügt, ist insofern insbesondere entsprechend der Konfiguration der Ladestation 1 nach den Fig. 6 und 7 ausgebildet. Eine zweite Ladestation 201 und eine fünfte Ladestation 501 sind über Unterverteilungen der ersten Ladestation 101 an ebendiese angeschlossen. Die Unterverteilungsleitungen 121, 151 dienen insofern zugleich als Energiezuleitung für die zweite Ladestation 201 und die fünfte Ladestation 501. An die zweite Ladestation 201 sind über zwei Unterverteilungsleitungen 231, 241 eine dritte Ladestation 301 und vierte Ladestation 401 angeschlossen. Die fünfte Ladestation 501 weist eine Unterverteilungsleitung 561 auf zum Anschließen einer sechsten Ladestation 601 an die fünfte Ladestation 501. Eine Dimensionierung der Energiezuleitung 20 und der diversen Unterverteilungsleitungen 121, 151, 231, 241, 561 erfolgt insbesondere bedarfsgerecht entsprechend der Leistungskonfiguration der Ladeinstallationsanordnung. Es ist insbesondere so, dass die zwischen der ersten Ladestation 101 und der zweiten Ladestation 201 sowie die zwischen der ersten Ladestation 101 und der fünften Ladestation 501 vorgesehene erste Unterverteilungsleitung 121, 151 bezogen auf einen Querschnitt kleiner dimensioniert ist als die Energiezuleitung 20. Eine zwischen der zweiten Ladestation 201 und der dritten Ladestation 301 sowie der vierten Ladestation 401 vorgesehene zweite Unterverteilungsleitung 231, 241 ist ebenso wie eine zweite Unterverteilungsleitung 561 zwischen der fünften Ladestation 501 und sechsten Ladestation 601 kann wiederum kleiner dimensioniert sein als die erste Unterverteilungsleitung 121, 151. Jeweils ist eine eigenen Steuerungs- und Kommunikationseinheit 34 für jede Ladestation 101, 201, 301, 401, 501, 601 der Ladeinstallationsanordnung vorgesehen, sodass die einzelnen Ladestationen 101, 201, 301, 401, 501, 601 autark betrieben werden können. Die Energieversorgung der zweiten bis sechsten Ladestation 201, 301, 401, 501, 601 erfolgt insofern unabhängig von der Funktionsfähigkeit beziehungsweise dem Betrieb der ersten Ladestation 101, welche über die Energiezuleitung 20 an das Versorgungsnetz 43 angeschlossen ist.

Vorliegend ist die Erfindung anhand nach Art einer wandmontierbaren Wallbox ausgeführten Ladestation 1, 100, 200, 300, 101, 201, 301, 401, 501, 601 erläutert. Selbstverständlich kann statt einer wandmontierten Ladestation 1, 100, 101, 200, 201, 300, 301, 401, 501, 601 eine bodenstehende Ladestation vorgesehen werden, welche beispielsweise nach Art einer Ladesäule vertikal erstreckt und schlank ausgebildet ist. Ebenfalls nur exemplarisch sind die dem Gehäuse 2 der Ladestation 1, 100, 101, 200, 201, 300, 301, 401, 501, 601 zugeordneten Steckelemente 4, 5 über ein angeschlagenes Ladekabel 6, 7 kontaktiert. Es kann ebenso vorgesehen sein, dass das Fahrzeug über ein externes Ladekabel an die Ladestation 1, 100, 101, 200, 201, 300, 301, 401, 501, 601 angeschlossen wird, wobei dass der Ladestation 1, 100, 101, 200, 201, 300, 301, 401, 501, 601 zugeordnete Steckelement 4, 5 in diesem Fall jedenfalls abschnittsweise in dem Gehäuse 2 integriert vorgesehen ist und über eine dem Steckelement 4, 5 zugeordnete Ausnehmung des Gehäuses 2 zugänglich ist derart, dass ein an dem externen Ladekabel vorgesehenes Gegensteckelement in das Steckelement 4, 5 der Ladestation 1, 100, 101, 200, 201, 300, 301, 401, 501, 601 eingesetzt werden kann. Die Erfindung ist darüber hinaus nicht darauf beschränkt, dass jedenfalls zwei Steckelemente 4, 5 je Ladestation 1, 100, 101, 200, 201, 300, 301, 401, 501, 601 vorgesehen sind. Es können beispielsweise Ladestation in einem einzigen Steckelement oder mit mehr als zwei Steckelementen vorgesehen werden. Darüber hinaus können in der Ladeinstallationsanordnung unterschiedliche Typen von Ladestationen installiert werden.

Als Fahrzeuge im Sinne der Erfindung gelten alle Automobile (PKW, LKW, Wohnmobile, Zweiräder, Busse usw.), Schienenfahrzeuge (insbesondere Lokomotiven), Wasserfahrzeuge (Schiffe), Luftfahrzeuge sowie Anhänger (Wohnanhänger), mobile Verkaufsstände usw. Die Ladestation dann ebenso verwendet werden zum Bereitstellen von elektrischer Energie für Fahrzeuge ohne Energiespeicher.

Die Steckelemente 4, 5 können beispielsweise als Steckdosen und/oder als in eine Steckdose einsetzbare Kupplungen ausgebildet sein.

Gleiche Bauteile und Bauteilfunktionen sind durch gleiche Bezugszeichen gekennzeichnet.

### Bezugszeichenliste

- 1: Ladestation
- 2: Gehäuse
- 3: Öffnung
- 4: Steckelement
- 5: Steckelement
- 6: Ladekabel
- 7: Ladekabel
- 8: Schließelement
- 9: Schloss
- 10: Anschlussschiene (L1)
- 11: Anschlussschiene (L2)
- 12: Anschlussschiene (L3)
- 13: Anschlussschiene (N)
- 14: Anschlussschiene (PE)
- 15: elektrischer Leiter
- 16: elektrischer Leiter
- 17: elektrischer Leiter
- 18: elektrischer Leiter
- 19: elektrischer Leiter
- 20: Energiezuleitung
- 21: elektrischer Leiter
- 22: elektrischer Leiter
- 23: elektrischer Leiter
- 24: elektrischer Leiter
- 25: elektrischer Leiter
- 26: Unterverteilungsleitung
- 27: Leitungssicherungseinheit
- 28: Leitungssicherungseinheit
- 29: Schmelzsicherung
- 30: Schutzschalter
- 31: Schutzschalter
- 32: Schalteinheit
- 33: Energieversorgungsmodul
- 34: Steuerungs- und Kommunikationseinheit
- 35: Versorgungseinheit
- 36: Gehäuserückwand
- 37: Querabdeckung
- 38: Abdeckung
- 39: Abdeckung
- 40: Abdeckung
- 41: Abdeckung
- 42: Abdeckung
- 43: Versorgungsnetz
- 44: Unterverteilungsleitung
- 45: Sicherungsleiste
- 46: Sicherungsleiste
- 47: Leitungssicherung
- 48: Querschnitt
- 49: Querschnitt
- 100: Ladestation
- 101: Ladestation
- 120: Unterverteilungsleitung
- 121: Unterverteilungsleitung
- 151: Unterverteilungsleitung
- 200: Ladestation
- 201: Ladestation
- 230: Unterverteilungsleitung
- 231: Unterverteilungsleitung
- 241: Unterverteilungsleitung
- 300: Ladestation
- 301: Ladestation
- 401: Ladestation
- 501: Ladestation
- 561: Unterverteilungsleitung
- 601: Ladestation

## Patentansprüche

1. Ladestation (1, 100, 101, 200, 201, 300, 301, 401, 501, 601) zum Bereitstellen elektrischer Energie für ein elektrisch betreibbares Fahrzeug umfassend ein Gehäuse (2) mit einer Öffnung (3), ein der Öffnung (3) zugeordnetes Schließelement (8) zum wahlweisen Freigeben und/oder Verschließen der Öffnung (3), wenigstens ein von außerhalb des Gehäuses (2) zugängliches Steckelement (4, 5) zum Herstellen einer Ladeverbindung mit dem Fahrzeug, eine in das Gehäuse geführte Energiezuleitung (20) mit einer Mehrzahl von elektrischen Leitern (15, 16, 17, 18, 19) zum Anschluss an ein Versorgungsnetz (43), eine dem Steckelement (4, 5) zugeordnete interne elektrische Verbindungsleitung mit einer Mehrzahl von elektrischen Leitern, ein dem Steckelement (4, 5) zugeordneter Schutzschalter (30, 31), eine Leitungssicherung zum Absichern wenigstens einzelner elektrischer Leiter der internen elektrischen Verbindungsleitung und eine der internen elektrischen Verbindungsleitung zugeordnetes Schalteinheit (32) zum wahlweisen Herstellen und Unterbrechen einer elektrisch leitenden Verbindung zwischen dem Steckelement (4, 5) und der Energiezuleitung (20), **dadurch gekennzeichnet, dass** in dem Gehäuse (2) eine Mehrzahl von zueinander beabstandeten und miteinander nicht elektrisch leitend verbundenen Anschlussschienen (10, 11, 12, 13, 14) vorgesehen ist, an denen jeweils ein elektrischer Leiter (15, 16, 17, 18, 19) der Energiezuleitung (20) einerseits und ein korrespondierender elektrischer Leiter der internen elektrischen Verbindungsleitung andererseits elektrisch leitend angeschlossen sind, und dass die Anschlussschienen (10, 11, 12, 13, 14) berührungsgeschützt in dem Gehäuse (2) montiert sind, wobei zur Realisierung des Berührungsschutzes die Anschlussschienen (10, 11, 12, 13, 14) zwischen einer Gehäusewandung und bevorzugt zwischen einer der Öffnung (3) gegenüberliegenden Gehäuserückwand (36) einerseits und dem Energieversorgungsmodul (33) und/oder einer die Leitungssicherung (47) für die wenigstens eine Unterverteilungsleitung (26, 44, 120, 121, 151, 230, 231, 241, 561) aufweisenden Sicherungsleiste (45, 46) und/oder einer weiteren Abdeckung (37, 38, 39, 40, 41, 42) andererseits vorgesehen sind.

2. Ladestation (1, 100, 101, 200, 201, 300, 301, 401, 501, 601) nach Anspruch 1, **dadurch gekennzeichnet, dass** eine Unterverteilungsleitung (26, 44, 120, 121, 151, 230, 231, 241, 561) mit einer Mehrzahl von elektrischen Leitern (21, 22, 23, 24, 25) vorgesehen ist, wobei die elektrischen Leiter (21, 22, 23, 24, 25) der Unterverteilungsleitung (26, 44, 120, 121, 151, 230, 231, 241, 561) elektrisch leitend an die verschiedenen Anschlussschienen (10, 11, 12, 13, 14) angeschlossen sind und wobei ein den Anschlussschienen (10, 11, 12, 13, 14) abgewandtes Ende der Unterverteilungsleitung (26, 44, 120, 121, 151, 230, 231, 241, 561) aus dem Gehäuse (2) herausgeführt ist.

3. Ladestation (1, 100, 101, 200, 201, 300, 301, 401, 501, 601) nach Anspruch 1 oder 2, **dadurch gekennzeichnet, dass** wenigstens einzelnen elektrischen Leitern (21, 22, 23, 24, 25) der Unterverteilungsleitung (26, 44, 120, 121, 151, 230, 231, 241, 561) Leitungssicherungen (47) zugeordnet sind.

4. Ladestation (1, 100, 101, 200, 201, 300, 301, 401, 501, 601) nach einem der Ansprüche 1 bis 3, **dadurch gekennzeichnet, dass** ein Querschnitt (48) der Unterverteilungsleitung (26, 44, 120, 121, 151, 230, 231, 241, 561) und/oder der einzelnen elektrischen Leiter der Unterverteilungsleitung (26, 44, 120, 121, 151, 230, 231, 241, 561) kleiner ausgeführt sind als ein Querschnitt (49) der Energiezuleitung (20) und/oder der einzelnen elektrischen Leiter der Energiezuleitung (20).

5. Ladestation (1, 100, 101, 200, 201, 300, 301, 401, 501, 601) nach einem der Ansprüche 1 bis 4, **dadurch gekennzeichnet, dass** zwei Unterverteilungsleitungen (26, 44, 120, 121, 151, 230, 231, 241, 561) oder mehr mit jeweils einer Mehrzahl von elektrischen Leitern (21, 22, 23, 24, 25) vorgesehen sind, wobei die Unterverteilungsleitungen (26, 44, 120, 121, 151, 230, 231, 241, 561) jeweils aus dem Gehäuse (2) herausgeführt sind und wobei einzelne elektrische Leiter (21, 22, 23, 24, 25) jeder Unterverteilungsleitung (26, 44, 120, 121, 151, 230, 231, 241, 561) elektrisch leitend an die Anschlussschienen (10, 11, 12, 13, 14) angeschlossen sind.

6. Ladestation (1, 100, 101, 200, 201, 300, 301, 401, 501, 601) nach einem der Ansprüche 1 bis 5, **dadurch gekennzeichnet, dass** die Anschlussschienen (10, 11, 12, 13, 14) aus einem metallischen, elektrisch leitenden Werkstoff gebildet sind und/oder dass ein Querschnitt der Anschlussschienen (10, 11, 12, 13, 14) so gewählt ist, dass die Anschlussschienen (10, 11, 12, 13, 14) starr sind, und/oder dass die Anschlussschienen (10, 11, 12, 13, 14) aus einem Halbzeug, insbesondere aus einem Profil, durch Ablängen hergestellt sind.

7. Ladestation (1, 100, 101, 200, 201, 300, 301, 401, 501, 601) nach einem der Ansprüche 1 bis 6, **dadurch gekennzeichnet, dass** wenigstens eine Phasenanschlussschiene (10, 11, 12) und bevorzugt zwei oder drei Phasenanschlussschienen (10, 11, 12) vorgesehen sind und/oder dass eine PE-Anschlussschiene (14) vorgesehen ist und/oder dass eine N-Anschlussschiene (13) vorgesehen ist.

8. Ladestation (1, 100, 101, 200, 201, 300, 301, 401, 501, 601) nach einem der Ansprüche 1 bis 7, **dadurch gekennzeichnet, dass** ein Energieversorgungsmodul (33) vorgesehen ist, welches die Leitungssicherungen für die elektrischen Leiter der internen elektrischen Verbindungsleitung und/oder die der internen elektrischen Verbindungsleitung zugeordnete Schalteinheit (32) und/oder den dem Steckelement (4, 5) zugeordneten Schutzschalter (30, 31) umfasst und welches durch die freigegebene Öffnung (3) des Gehäuses (2) zugänglich ist.

9. Ladestation (1, 100, 101, 200, 201, 300, 301, 401, 501, 601) nach einem der Ansprüche 1 bis 8, **dadurch gekennzeichnet, dass** wenigstens zwei Steckelemente (4, 5) dem Gehäuse (2) zugeordnet sind zum Anschließen von zwei Fahrzeugen und dass für jedes der wenigstens zwei Steckelemente (4, 5) eine einzelne interne elektrische Verbindungsleitung vorgesehen ist, wobei die elektrischen Leiter der wenigstens zwei internen elektrischen Verbindungsleitungen über das Energieversorgungsmodul (33) jeweils elektrisch leitend an die Anschlussschienen (10, 11, 12, 13, 14) angeschlossen sind.

10. Ladestation (1, 100, 101, 200, 201, 300, 301, 401, 501, 601) nach einem der Ansprüche 1 bis 9, **dadurch gekennzeichnet, dass** die Anschlussschienen (10, 11, 12, 13, 14) horizontal erstreckt in dem Gehäuse (2) festgelegt sind.

11. Ladestation (1, 100, 101, 200, 201, 300, 301, 401, 501, 601) nach einem der Ansprüche 1 bis 10, **dadurch gekennzeichnet, dass** dem Schließelement (8) ein Schloss (9) zugeordnet ist, wobei das Schließelement (8) durch das Schloss (9) in einer Schließposition, in der die Öffnung (3) des Gehäuses (2) durch das Schließelement (8) verschlossen ist, verriegelbar ist derart, dass einem missbräuchlichen Zugriff auf das in dem Gehäuse (2) vorgesehenen Energieversorgungsmodul (33) und/oder die Sicherungsleiste (45, 46) und/oder die Anschlussschienen (10, 11, 12, 13, 14) vorgebeugt ist.

12. Ladeinstallationsanordnung mit wenigstens zwei Ladestationen (100, 101, 200, 201, 300, 301, 401, 501, 601) zum Bereitstellen elektrischer Energie für ein elektrisch betreibbares Fahrzeug, wobei eine erste Ladestation (100, 101) über eine Energiezuleitung (20) an ein Versorgungsnetz (43) angeschlossen ist und wobei eine von der ersten Ladestation (100, 101) zu einer zweiten Ladestation (200, 201) geführte Unterverteilung vorgesehen ist, **dadurch gekennzeichnet, dass** wenigstens die erste Ladestation (100, 101) als Ladestation nach einem der Ansprüche 1 bis 10 ausgeführt ist und dass zur Realisierung der Unterverteilung eine erste Unterverteilungsleitung (120, 121, 151) aus einem Gehäuse (2) der ersten Ladestation (100, 101) herausgeführt und als Energiezuleitung für die zweite Ladestation (200, 201) in ein Gehäuse (2) derselben geführt ist.

13. Ladeinstallationsanordnung nach Anspruch 12, **dadurch gekennzeichnet, dass** eine dritte Ladestation (300, 301) zum Bereitstellen elektrischer Energie für ein elektrisch betreibbares Fahrzeug vorgesehen ist, wobei die dritte Ladestation (300, 301) über eine der dritten Ladestation (300, 301) als Energiezuleitung dienende Unterverteilungsleitung (230, 231, 241, 561) mittelbar an das Versorgungsnetz (43) angeschlossen ist und wobei die Unterverteilungsleitung (230, 231, 241, 561) entweder von der ersten Ladestation (100, 101) oder von der zweiten Ladestation (200, 201) zur dritten Ladestation (300, 301) geführt ist.

14. Ladeinstallationsanordnung nach Anspruch 12 oder 13, **dadurch gekennzeichnet, dass** ein Querschnitt (48) der ersten und/oder zweiten Unterverteilungsleitung (120, 121, 151, 230, 231, 241, 561) kleiner ist als ein Querschnitt der Energiezuleitung (20) und/oder dass ein Querschnitt der zweiten Unterverteilungsleitung (230, 231, 241, 561) kleiner ist als ein Querschnitt (48) der ersten Unterverteilungsleitung (120, 121, 151).

15. Ladeinstallationsanordnung nach einem der Ansprüche 12 bis 14, **dadurch gekennzeichnet, dass** wenigstens einzelnen elektrischen Leitern (21, 22, 23, 24, 25) der Unterverteilungsleitung (26, 44, 120, 121, 151, 230, 231, 241, 561) eine Leitungssicherung zugeordnet ist, sofern ein Querschnitt (48) der Unterverteilungsleitung (26, 44, 120, 121, 151, 230, 231, 241, 561) und/oder der einzelnen elektrischen Leiter der Unterverteilungsleitung (26, 44, 120, 121, 151, 230, 231, 241, 561) kleiner dimensioniert ist als ein Querschnitt (49) der Energiezuleitung (20) und/oder der einzelnen elektrischen Leiter (15, 16, 17, 18, 19) der Energiezuleitung (20).

## Claims

1. Charging station (1, 100, 101, 200, 201, 300, 301, 401, 501, 601) for providing electrical energy for an electrically drivable vehicle comprising a housing (2) with an opening (3), a closing element (8) associated with the opening (3) for optional exposing or closing of the opening (3), at least a plug-in element (4, 5) accessible from outside the housing (2) for establishing a charging connection to the vehicle, a power supply cable (20) taken into the housing with a plurality of electrical conductors (15, 16, 17, 18, 19) for connecting to a supply network (43), an internal electrical connection cable associated with the plug-in element (4, 5) with a plurality of electrical conductors, a circuit-breaker (30, 31) associated with the plug-in element (4, 5), a conductor fuse for protecting at least individual electrical conductors of the internal electrical connection cable, and a switch unit (32) associated with the internal electrical connection cable for optionally making and breaking an internal electrical connection between the plug-in element (4, 5) and the power supply cable (20), **characterised in that** a plurality of mutually remote and mutually non-electrically conductively associated terminal bars (10, 11, 12, 13, 14) are provided in the housing (2), to which one electrical conductor (15, 16, 17, 18, 19) each of the power supply cable (20) on the one hand and a corresponding electrical conductor of the internal electrical connection cable on the other hand are connected electrically conductively, and **in that** the terminal bars (10, 11, 12, 13, 14) are mounted so as to be shock hazard-protected in the housing (2), wherein to achieve protection from shock hazards the terminal bars (10, 11, 12, 13, 14) are provided between a housing wall and preferably between a housing rear wall (36) opposing the opening (3) on the one hand, and the energy supply module (33) and/or a fuse block (45, 46) having the conductor fuse (47) for the at least one sub-distribution conductor (26, 44, 120, 121, 151, 230, 231, 241, 561) and/or an additional cover (37, 38, 39, 40, 41, 42) on the other hand.

2. Charging station (1, 100, 101, 200, 201, 300, 301, 401, 501, 601) according to claim 1, **characterised in that** a sub-distribution conductor (26, 44, 120, 121, 151, 230, 231, 241, 561) is provided with a plurality of electrical conductors (21, 22, 23, 24, 25), wherein the electrical conductors (21, 22, 23, 24, 25) of said sub-distribution conductor (26, 44, 120, 121, 151, 230, 231, 241, 561) are connected electrically conductively to the various terminal bars (10, 11, 12, 13, 14) and wherein an end of the sub-distribution conductor (26, 44, 120, 121, 151, 230, 231, 241, 561) facing away from the terminal bars (10, 11, 12, 13, 14) is brought out of the housing (2).

3. Charging station (1, 100, 101, 200, 201, 300, 301, 401, 501, 601) according to claim 1 or 2, **characterised in that** at least individual electrical conductors (21,22, 23, 24, 25) of the sub-distribution conductor (26, 44, 120, 121, 151, 230, 231, 241, 561) are associated conductor fuses (47).

4. Charging station (1, 100, 101, 200, 201, 300, 301, 401, 501, 601) according to any one of claims 1 to 3, **characterised in that** a cross-section (48) of the sub-distribution conductor (26, 44, 120, 121, 151, 230, 231, 241, 561) and/or of the single electrical conductors of the sub-distribution conductor (26, 44, 120, 121, 151, 230, 231, 241, 561) is smaller in design than a cross-section (49) of the power supply cable (20) and/or of the individual electrical conductors of the power supply cable (20).

5. Charging station (1, 100, 101, 200, 201, 300, 301, 401, 501, 601) according to any one of claims 1 to 4, **characterised in that** two or more sub-distribution conductors (26, 44, 120, 121, 151, 230, 231, 241, 561) are each provided with a plurality of electrical conductors (21, 22, 23, 24, 25), wherein the sub-distribution conductors (26, 44, 120, 121, 151, 230, 231, 241, 561) are each brought out of the housing (2) and wherein individual electrical conductors (21, 22, 23, 24, 25) of each sub-distribution conductor (26, 44, 120, 121, 151, 230, 231, 241, 561) are connected electrically conductively to the terminal bars (10, 11, 12, 13, 14).

6. Charging station (1, 100, 101, 200, 201, 300, 301, 401, 501, 601) according to any one of claims 1 to 5, **characterised in that** the terminal bars (10, 11, 12, 13, 14) are formed of a metallic, electrically conductive material and/or **in that** a cross-section of the terminal bars (10, 11, 12, 13, 14) is selected such that the terminal bars (10, 11, 12, 13, 14) are rigid, and/or the terminal bars (10, 11, 12, 13, 14) are made of a semi-finished part, in particular a profile section, by cutting to length.

7. Charging station (1, 100, 101, 200, 201, 300, 301, 401, 501, 601) according to any one of claims 1 to 6, **characterised in that** at least a phase terminal bar (10, 11, 12), and preferably two or three phase terminal bars (10, 11, 12), are provided and/or **in that** a PE terminal bar (14) is provided and/or **in that** an N terminal bar (13) is provided.

8. Charging station (1, 100, 101, 200, 201, 300, 301, 401, 501, 601) according to any one of claims 1 to 7, **characterised in that** an energy supply module (33) is provided which encloses the conductor fuses for the electrical conductors of the internal electrical connection cable and/or the switch unit (32) associated with the internal electrical connection cable and/or the circuit-breaker (30, 31) associated with the plug-in element (4, 5) and which can be accessed via the exposed opening (3) of the housing (2).

9. Charging station (1, 100, 101, 200, 201, 300, 301, 401, 501, 601) according to any one of claims 1 to 8, **characterised in that** at least two plug-in elements (4, 5) are associated with the housing (2) for connecting two vehicles and **in that** for each of the at least two plug-in elements (4, 5) a single internal electrical connection cable is provided, wherein the electrical conductors of the at least two internal electrical connection cables are connected via the energy supply module (33) each connected electrically conductively to the terminal bars (10, 11, 12, 13, 14).

10. Charging station (1, 100, 101, 200, 201, 300, 301, 401, 501, 601) according to any one of claims 1 to 9, **characterised in that** the terminal bars (10, 11, 12, 13, 14) are fixed to extend horizontally within the housing (2).

11. Charging station (1, 100, 101, 200, 201, 300, 301, 401, 501, 601) according to any one of claims 1 to 10, **characterised in that** a lock (9) is associated with the closing element (8), wherein by means of the lock (9) the closing element (8) can be locked in a closing position in which the opening (3) of the housing (2) is closed by means of the closing element (8), so as to prevent unauthorised access to the energy supply module (33) provided in the housing (2) and/or the fuse block (45, 46) and/or the terminal bars (10, 11, 12, 13, 14).

12. Charging installation assembly with at least two charging stations (100, 101, 200, 201, 300, 301, 401, 501, 601) for providing electrical energy for an electrically drivable vehicle, wherein a first charging station (100, 101) is connected via a power supply cable (20) to a supply network (43) and wherein a sub-distribution is led from the first charging station (100, 101) to a second charging station (200, 201), **characterised in that** at least the first charging station (100, 101) is constructed as a charging station according to any one of claims 1 to 10 and **in that** for realising the sub-distribution a first sub-distribution conductor (120, 121, 151) is brought out of a housing (2) of the first charging station (100, 101) and taken as a power supply cable for the second charging station (200, 201) into a housing (2) thereof.

13. Charging installation assembly according to claim 12, **characterised in that** a third charging station (300, 301) is provided to supply electrical energy for an electrically drivable vehicle, wherein the third charging station (300, 301) is connected indirectly to the supply network (43) via a sub-distribution conductor (230, 231, 241, 561) serving the third charging station (300, 301) as a power supply cable and wherein the sub-distribution conductor (230, 231, 241, 561) is taken either from the first charging station (100, 101) or from the second charging station (200, 201) to the third charging station (300, 301).

14. Charging installation assembly according to claim 12 or 13, **characterised in that** a cross-section (48) of the first and/or second sub-distribution conductor (120, 121, 151, 230, 231, 241, 561) is smaller than a cross-section of the power supply cable (20) and/or **in that** a cross-section of the second sub-distribution conductor (230, 231, 241, 561) is smaller than a cross-section (48) of the first sub-distribution conductor (120, 121, 151).

15. Charging installation assembly according to any one of claims 12 to 14, **characterised in that** a conductor fuse is associated with at least individual electrical conductors (21, 22, 23, 24, 25) of the sub-distribution conductor (26, 44, 120, 121, 151, 230, 231, 241, 561), provided a cross-section (48) of the sub-distribution conductor (26, 44, 120, 121, 151, 230, 231, 241, 561) and/or of the individual electrical conductors of the sub-distribution conductor (26, 44, 120, 121, 151, 230, 231, 241, 561) is dimensioned smaller than a cross-section (49) of the power supply cable (20) and/or of the individual electrical conductors (15, 16, 17, 18, 19) of the power supply cable (20).

## Revendications

1. Station de charge (1, 100, 101, 200, 201, 300, 301, 401, 501, 601) destinée à fournir de l'énergie électrique à un véhicule électrique comprenant un boîtier (2) doté d'une ouverture (3), un élément de fermeture (8) ordonné à l'ouverture (3) pour libérer et/ou obturer l'ouverture (3) au choix, au moins un élément de fiche (4, 5) accessible depuis l'extérieur du boîtier (2) permettant d'établir une connexion de charge avec le véhicule, une ligne d'alimentation en énergie (20) guidée dans le boîtier dotée d'une pluralité de conducteurs électriques (15, 16, 17, 18, 19) pour le raccordement à un réseau d'alimentation (43), une ligne de connexion électrique interne ordonnée à l'élément de fiche (4, 5) dotée d'une pluralité de conducteurs électriques, un disjoncteur (30, 31) ordonné à l'élément de fiche (4, 5), un fusible permettant de protéger au moins les conducteurs électriques individuels de la ligne de connexion électrique interne et une unité de commutation (32) ordonnée à la ligne de connexion électrique interne pour l'établissement et la rupture au choix d'une connexion électriquement conductrice entre l'élément de fiche (4, 5) et la ligne d'alimentation en énergie (20), **caractérisée en ce que** dans le boîtier (2) une pluralité de rails de raccordement (10, 11, 12, 13, 14) écartés l'un de l'autre et sans connexion électriquement conductrice l'un à l'autre est prévue, auxquels sont raccordés de manière électriquement conductrice respectivement un conducteur électrique (15, 16, 17, 18, 19) de la ligne d'alimentation en énergie (20) d'un côté et un conducteur électrique correspondant de la ligne de connexion électrique interne de l'autre côté, et **en ce que** les rails de raccordement (10, 11, 12, 13, 14) sont montés dans le boîtier (2) protégés contre les contacts, dans laquelle afin de réaliser la protection contre les contacts les rails de raccordement (10, 11, 12, 13, 14) sont prévus entre une paroi de boîtier et de préférence entre une paroi arrière de boîtier (36) opposée à l'ouverture (3) d'un côté et le module d'alimentation en énergie (33) et/ou un porte-fusible (45, 46) comportant le fusible (47) pour l'au moins une ligne de sous-distribution (26, 44, 120, 121, 151, 230, 231, 241, 561) et/ou une enveloppe supplémentaire (37, 38, 39, 40, 41, 42) d'un autre côté.

2. Station de charge (1, 100, 101, 200, 201, 300, 301, 401, 501, 601) selon la revendication 1, **caractérisée en ce qu'**une ligne de sous-distribution (26, 44, 120, 121, 151, 230, 231, 241, 561) est prévue dotée d'une pluralité de conducteurs électriques (21, 22, 23, 24, 25), dans laquelle les conducteurs électriques (21, 22, 23, 24, 25) de la ligne de sous-distribution (26, 44, 120, 121, 151, 230, 231, 241, 561) sont raccordés de manière électriquement conductrice aux différents rails de raccordement (10, 11, 12, 13, 14) et dans laquelle une extrémité de la ligne de sous-distribution (26, 44, 120, 121, 151, 230, 231, 241, 561) se détournant des rails de raccordement (10, 11, 12, 13, 14) sort du boîtier (2).

3. Station de charge (1, 100, 101, 200, 201, 300, 301, 401, 501, 601) selon la revendication 1 ou 2, **caractérisée en ce que** des fusibles (47) sont attribués au moins à des conducteurs électriques individuels (21, 22, 23, 24, 25) de la ligne de sous-distribution (26, 44, 120, 121, 151, 230, 231, 241, 561).

4. Station de charge (1, 100, 101, 200, 201, 300, 301, 401, 501, 601) selon l'une des revendications 1 à 3, **caractérisée en ce qu'**une section (48) de la ligne de sous-distribution (26, 44, 120, 121, 151, 230, 231, 241, 561) et/ou des conducteurs électriques individuels de la ligne de sous-distribution (26, 44, 120, 121, 151, 230, 231, 241, 561) est réalisée comme inférieure à une section (49) de la ligne d'alimentation en énergie (20) et/ou des conducteurs électriques individuels de la ligne d'alimentation en énergie (20).

5. Station de charge (1, 100, 101, 200, 201, 300, 301, 401, 501, 601) selon l'une des revendications 1 à 4, **caractérisée en ce que** deux lignes de sous-distribution (26, 44, 120, 121, 151, 230, 231, 241, 561) ou plus sont prévues dotées respectivement d'une pluralité de conducteurs électriques (21, 22, 23, 24, 25), dans laquelle les lignes de sous-distribution (26, 44, 120, 121, 151, 230, 231, 241, 561) sortent respectivement du boîtier (2) et dans laquelle des conducteurs électriques individuels (21, 22, 23, 24, 25) de chaque ligne de sous-distribution (26, 44, 120, 121, 151, 230, 231, 241, 561) sont raccordés de manière électriquement conductrice aux rails de raccordement (10, 11, 12, 13, 14).

6. Station de charge (1, 100, 101, 200, 201, 300, 301, 401, 501, 601) selon l'une des revendications 1 à 5, **caractérisée en ce que** les rails de raccordement (10, 11, 12, 13, 14) sont formés d'un matériau métallique électriquement conducteur et/ou **en ce qu'**une section des rails de raccordement (10, 11, 12, 13, 14) est choisie de telle sorte que les rails de raccordement (10, 11, 12, 13, 14) sont rigides, et/ou **en ce que** les rails de raccordement (10, 11, 12, 13, 14) sont fabriqués par tronçonnage à partir d'un produit semi-fini, en particulier à partir d'un profilé.

7. Station de charge (1, 100, 101, 200, 201, 300, 301, 401, 501, 601) selon l'une des revendications 1 à 6, **caractérisée en ce qu'**au moins un rail de raccordement de phase (10, 11, 12) et de préférence deux ou trois rails de raccordement de phase (10, 11, 12) sont prévus et/ou **en ce qu'**un rail de raccordement de mise à la terre (14) est prévu et/ou **en ce qu'**un rail de raccordement neutre (13) est prévu.

8. Station de charge (1, 100, 101, 200, 201, 300, 301, 401, 501, 601) selon l'une des revendications 1 à 7, **caractérisée en ce qu'**un module d'alimentation en énergie (33) est prévu, lequel comprend les fusibles pour les conducteurs électriques de la ligne de connexion électrique interne et/ou l'unité de commutation (32) ordonnée à la ligne de connexion électrique interne et/ou le disjoncteur (30, 31) ordonné à l'élément de fiche (4, 5) et lequel est accessible à travers l'ouverture (3) dégagée du boîtier (2).

9. Station de charge (1, 100, 101, 200, 201, 300, 301, 401, 501, 601) selon l'une des revendications 1 à 8, **caractérisée en ce qu'**au moins deux éléments de fiche (4, 5) sont ordonnés au boîtier (2) pour le raccordement de deux véhicules et **en ce que** pour chacun des au moins deux éléments de fiche (4, 5) une ligne de connexion électrique interne individuelle est prévue, dans laquelle les conducteurs électriques des aux moins deux lignes de connexion électrique sont raccordés respectivement de manière électriquement conductrice aux rails de raccordement (10, 11, 12, 13, 14) par le biais du module d'alimentation en énergie (33).

10. Station de charge (1, 100, 101, 200, 201, 300, 301, 401, 501, 601) selon l'une des revendications 1 à 9, **caractérisée en ce que** les rails de raccordement (10, 11, 12, 13, 14) sont fixés à l'horizontale dans le boîtier (2).

11. Station de charge (1, 100, 101, 200, 201, 300, 301, 401, 501, 601) selon l'une des revendications 1 à 10, **caractérisée en ce qu'**une serrure (9) est ordonnée à l'élément de fermeture (8), dans laquelle l'élément de fermeture (8) peut être verrouillé par la serrure (9) dans une position de fermeture, où l'ouverture (3) du boîtier (2) est fermé par l'élément de fermeture (8) de façon à prévenir un accès non-autorisé au module d'alimentation en énergie (33) prévu dans le boîtier (2) et/ou au porte-fusible (45, 46) et/ou aux rails de raccordement (10, 11, 12, 13, 14).

12. Système d'installation de charge doté d'au moins deux stations de charge (100, 101, 200, 201, 300, 301, 401, 501, 601) destinée à fournir de l'énergie électrique à un véhicule électrique, dans lequel une première station de charge (100, 101) est raccordée à un réseau d'alimentation (43) par le biais d'une ligne d'alimentation en énergie (20) et dans lequel une sous-distribution menant de la première station de charge (100, 101) à une deuxième station de charge (200, 201) est prévue, **caractérisé en ce qu'**au moins la première station de charge (100, 101) est réalisée comme station de charge selon l'une des revendications 1 à 10 et **en ce que** pour réaliser la sous-distribution une première ligne de sous-distribution (120, 121, 151) sort d'un boîtier (2) de la première station de charge (100, 101) et entre dans un boîtier (2) de la deuxième station de charge (200, 201) comme ligne d'alimentation en énergie pour celle-ci.

13. Système d'installation de charge selon la revendication 12, **caractérisé en ce qu'**une troisième station de charge (100, 101) destinée à fournir de l'énergie électrique à un véhicule électrique est prévue, dans lequel la troisième station de charge (300, 301) est raccordée indirectement au réseau d'alimentation (43) par le biais d'une ligne de sous-distribution (230, 231, 241, 561) de la troisième station de charge (300, 301) servant de ligne d'alimentation en énergie et dans lequel la ligne de sous-distribution (230, 231, 241, 561) est menée ou bien depuis la première station de charge (100, 101) ou bien depuis la deuxième station de charge (200, 201) vers la troisième station de charge (300, 301).

14. Système d'installation de charge selon la revendication 12 ou 13, **caractérisé en ce qu'**une section (48) de la première et/ou de la deuxième ligne de sous-distribution (120, 121, 151, 230, 231, 241, 561) est inférieure à une section de la ligne d'alimentation en énergie (20) et/ou **en ce qu'**une section (48) de la première ligne de sous-distribution (230, 231, 241, 561) est inférieure à une section de la deuxième ligne de sous-distribution (120, 121, 151).

15. Système d'installation de charge selon l'une des revendications 12 à 14, **caractérisé en ce qu'**un fusible est attribué au moins à des conducteurs électriques individuels (21, 22, 23, 24, 25) de la ligne de sous-distribution (26, 44, 120, 121, 151, 230, 231, 241, 561), pour autant qu'une section (48) de la ligne de sous-distribution (26, 44, 120, 121, 151, 230, 231, 241, 561) et/ou des conducteurs électriques individuels de la ligne de sous-distribution (26, 44, 120, 121, 151, 230, 231, 241, 561) est dimensionnée comme inférieure à une section (49) de la ligne d'alimentation en énergie (20) et/ou des conducteurs électriques individuels (15, 16, 17, 18, 19) de la ligne d'alimentation en énergie (20).
